# EUROPEAN PATENT APPLICATION

(11) **EP 2 613 591 A1**
(43) Date of publication of application: **10.07.2013**
(21) Application number: 12290003.8
(22) Date of filing: 04.01.2012
(51) Int. Cl.: H04W 48/14

(54) **A telecommunications system, a small cell base station and a method of obtaining information stored in a small cell base station**

(71) Applicant: Alcatel Lucent, 75007 Paris (FR)
(72) Inventor: Kirkman, Stephen, Chippenham, Wiltshire SN15 3XQ (GB); Brend, graham R., Bath, Somerset BA1 7UE (GB)
(74) Representative: Sarup, David Alexander

(57) **Abstract**

A method of obtaining information stored in a small cell base station for wireless telecommunications of use of the small cell base station, in which a user terminal in the coverage area of the small cell base station transmits over air to the small cell base station a request for the information and the identifier of the user terminal, the small cell base station determines that the identifier is valid for the user terminal to be permitted to be sent the information, the small cell base station transmits the information, and the user terminal receives and displays the information.

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as small cells, microcells, picocells, or femtocells, but we use the term small cells generically for cells that are smaller than macrocells. One way to establish a small cell is to provide a small cell base station that operates within a relatively limited range within the coverage area of a macrocell. One example of use of a small cell base station is to provide wireless communication coverage within a building.

The small cell base station is of a relatively low transmit power and hence each small cell is of a small coverage area compared to a macrocell. A typical coverage range is tens of metres.

Small cell base stations have auto-configuring properties so as to support plug-and-play deployment by users, for example in which small cell base stations may integrate themselves into an existing macrocell network so as to connect to the core network of the macrocell network.

Small cell base stations are intended primarily for users belonging to a particular home or office. Small cell base stations may be private access or public access. In small cell base stations that are private access, access is restricted only to registered users, for example family members or particular groups of employees. In small cell base stations that are public access, other users may also use the small lcell base station, subject to certain restrictions to protect the Quality of Service received by registered users.

One known type of small cell base station uses a broadband Internet Protocol connection as "backhaul", namely for connecting to the core network. One type of broadband Internet Protocol connection is a Digital Subscriber Line (DSL). The DSL connects a DSL transmitter-receiver ("transceiver") of the small cell base station to the core network. The DSL allows voice calls and other services provided via the small cell base station to be supported. The small cell base station also includes a radio frequency (RF) transceiver connected to an antenna for radio communications. An alternative to such a wired broadband backhaul is to have a wireless backhaul.

### Summary

The reader is referred to the appended independent claims. Some preferred features are laid out in the dependent claims.

An example of the present invention is a method of obtaining information stored in a small cell base station for wireless telecommunications of use of the small cell base station, in which a user terminal in the coverage area of the small cell base station transmits over air to the small cell base station a request for the information and the identifier of the user terminal, the small cell base station determines that the identifier is valid for the user terminal to be permitted to be sent the information, the small cell base station transmits the information, and the user terminal receives and displays the information.

Preferred embodiments of the invention provide a mechanism for information about small cell usage to be obtained by a small cell base station's owner in real-time. Such information can be used by the owner to alter the configuration, or position, of the small cell or check overall usage and so assist in small cell management.

Preferred embodiments give the small cell base station owner the ability to obtain information directly from the small cell base station about users that are currently using the small cell base station, or have used the small cell in the recent past.

The known approach to gathering usage information on a base station for wireless telecommunications is for a central control node in the core network of the mobile network operator's network to gather that data for each of multiple base stations. For example the information is gathered via wired connections in the radio network controller (RNC) under the control of the operator's core network. The usage information stored is statistical for example current loading of a macrocell base stations in terms of number of active call connections. Such information is then normally only available to the mobile network operator, since they are responsible for the deployment and management of macrocell base stations. Preferred embodiments of the present invention are different. These embodiments involve providing detailed use information about a small cell base station locally and wirelessly to a local managing user. This may be in virtually real time. Preferred embodiments avoid the complexity and delays of the known approach.

The inventors realised that since many small cells are user-deployed, it is beneficial to provide owners of small cell base stations with a way of managing their small cell base station in real-time, by obtaining information or statistics on how the small cell base station is being used and who is using the small cell base station. This enables the owner to take appropriate steps to change the configuration of the small cell base station or change other users' behaviour.

Preferred embodiments provide methods which do not involve the mobile network operator (MNO) as in a network including tens of thousands of small cells to involve the MNO would be an onerous task and be inconsistent with the aim that each small cell base station be "self-optimising" for example by the individual small cell base station owner.

### Brief Description of the Drawings

Embodiments of the present invention will now be described by way of example and with reference to the drawings, in which:
Figure 1 is a diagram illustrating a wireless communications network according to a first embodiment of the present invention,
Figure 2 is a diagram illustrating an example femtocell base station deployment within one macrocell shown in Figure 1,
Figure 3 is a diagram illustrating in more detail the example femtocell base station and the femto owner's user terminal,
Figure 4 is a message sequence diagram illustrating a method of retrieving usage information from the femtocell base station,
Figure 5 is a representation of how the information is displayed on the user terminal of the owner of the femtocell base station,
Figure 6 is a message sequence diagram illustrating a method of retrieving usage information from a femtocell base station according to a second embodiment of the invention, and
Figure 7 is a message sequence diagram illustrating use of a femtocell base station according to a further embodiment of the invention.

### Detailed Description

We now describe a network including femtocell base stations then look in greater detail at providing usage information to the owner of a femtocell base station.Femtocell base stations are sometimes referred to as femtos. A femtocell is a type of small cell.

### Network

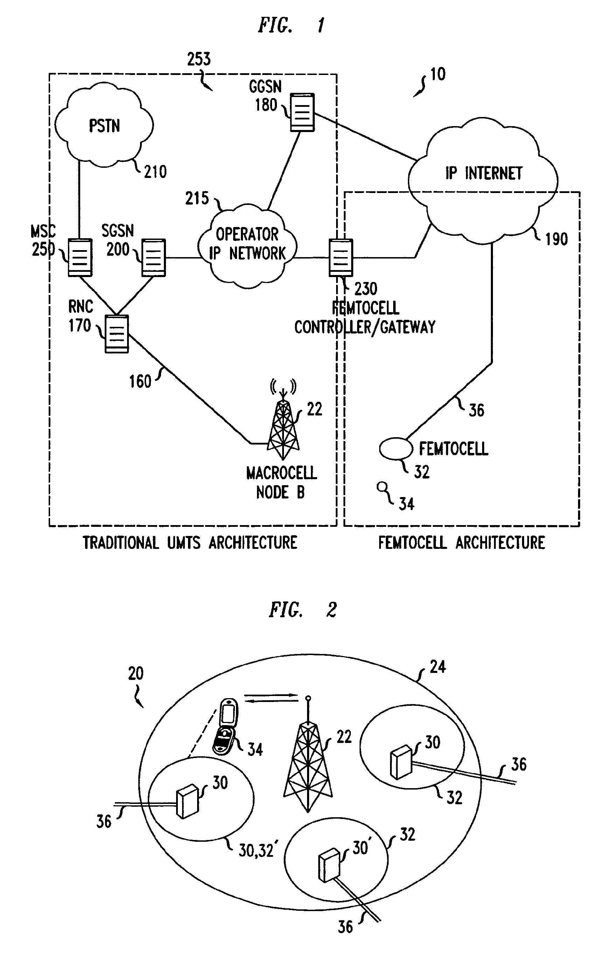

As shown in Figures 1 and 2, a network 10 for wireless communications, through which a user terminal 34 may roam, includes two types of base station, namely macrocell base stations and femtocell base stations (the latter being sometimes called "femtos"). One macrocell base station 22 is shown in Figures 1 and 2 for simplicity. Each macrocell base station has a radio coverage area 24 that is often referred to as a macrocell. The geographic extent of the macrocell 24 depends on the capabilities of the macrocell base station 22 and the surrounding geography.

Within the macrocell 24, each femtocell base station 30 provides wireless communications within a corresponding femtocell 32. A femtocell is a radio coverage area. The radio coverage area of the femtocell 32 is much less than that of the macrocell 24. For example, the femtocell 32 corresponds in size to a user's office or home.

As shown in Figure 1, the network 10 is managed by a radio network controller, RNC, 170. The radio network controller, RNC, 170 controls the operation, for example by communicating with macrocell base stations 22 via a backhaul communications link 160. The radio network controller 170 maintains a neighbour list which includes information about the geographical relationship between cells supported by base stations. In addition, the radio network controller 170 maintains location information which provides information on the location of the user equipment within the wireless communications system 10. The radio network controller 170 is operable to route traffic via circuit-switched and packet-switched networks. For circuit-switched traffic, a mobile switching centre 250 is provided with which the radio network controller 170 may communicate. The mobile switching centre 250 communicates with a circuit-switched network such as a public switched telephone network (PSTN) 210. For packet-switched traffic, the network controller 170 communicates with serving general packet radio service support nodes (SGSNs) 220 and a gateway general packet radio support node (GGSN) 180. The GGSN then communicates with a packet-switch core 190 such as, for example, the Internet.

The MSC 250 , SGSN 220, GGSN 180 and operator IP network constitute a so-called core network 253. The SGSN 220 and GGSN 180 are connected by an operator IP network 215 to a femtocell controller/gateway 230.

The femtocell controller/gateway 230 is connected via the Internet 190 to the femtocell base stations 30. These connections to the femtocell controller/gateway 230 are broadband Internet Protocol connections ("backhaul") connections.

In Figure 2, three femtocell base stations 30 and corresponding femtocells 32 are shown for simplicity.

It is possible for a mobile terminal 34 within the macrocell 24 to communicate with the macrocell base station 22 in known manner. When the mobile terminal 34 enters into a femtocell 32 for which the mobile terminal is registered for communications within the femtocell base station 30, it is desirable to handover the connection with the mobile terminal from the macrocell to the femtocell. In the example shown in Figure 2, the user of mobile terminal 34 is a preferred user of the nearest 32' of the femtocells 32.

As shown in Figure 2, the femtocell base stations 30 are connected via the broadband Internet Protocol connections ("backhaul") 36 to the core network (not shown in Figure 2) and hence the rest of the telecommunications "world" (not shown in Figure 2). The "backhaul" connections 36 allow communications between the femtocell base stations 30 through the core network (not shown). The macrocell base station is also connected to the core network (not shown in Figure 2).

### Providing usage information to the owner of a femocell base station

We now describe various examples whereby an owner of a femtocell base station is able to obtain information directly from the femtocell base station about users that use that femtocell or have used it in the recent past.

### Periodic Information of femtocell base station usage

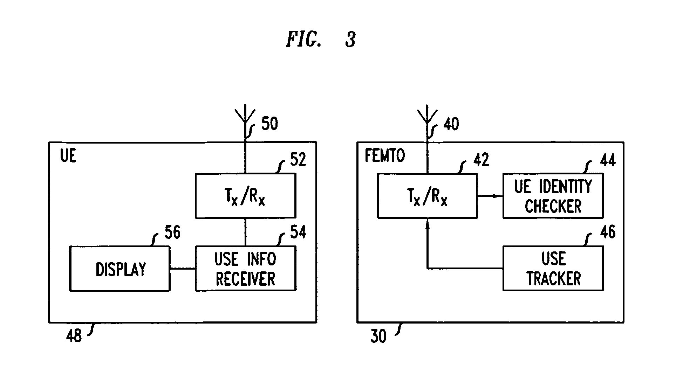

As shown in Figure 3, the femtocell base station 30 has an antenna 40 connected to a transmitter-receiver ("transceiver") 42. The transceiver 42 is connected to a UE identity checker 44 and to a use tracker 46.

As also shown in Figure 3, the user terminal 48 of the femtocell base station owner (not shown) has an antenna 50 connected to a transceiver 52 connected to a decoder 54 of received use information. The decoder is connected to a display 56.

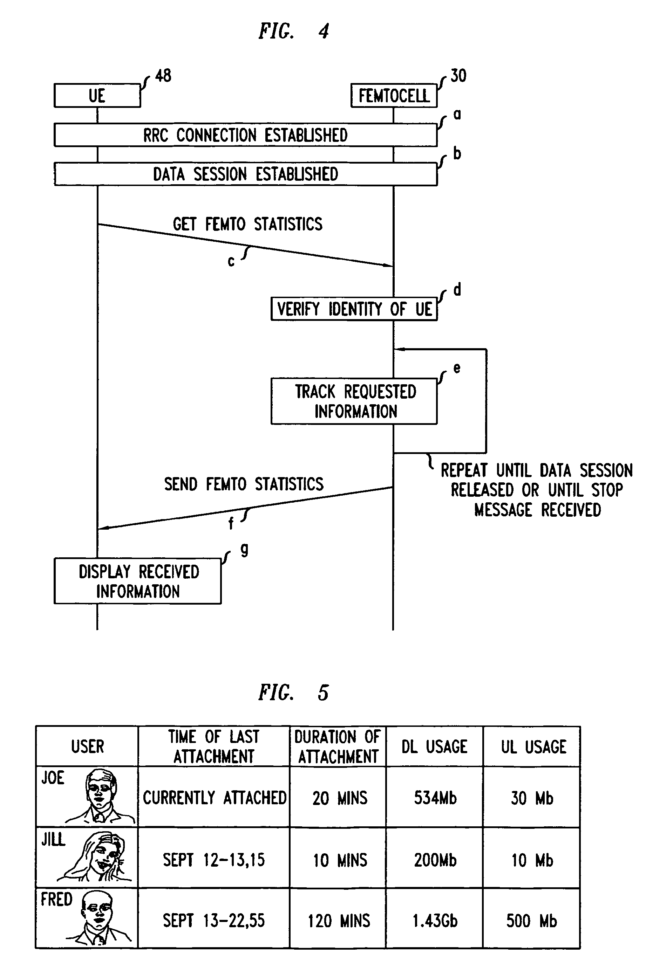

As shown in Figure 4, in this example, at some point in time, the owner of the user terminal 48 wishes to obtain usage information from his/her femto so uses their user terminal 48 to request the establishment of a data bearer channel between the femto 30 and the user terminal 48.

In consequence, a Radio Resource Control (RRC) connection is established (step a) between the femto 30 and user terminal 48.

This is followed by the user terminal 48 triggering establishment (step b) of a data bearer channel between the femto 30 and the user terminal 48. The user terminal 48 then sends (step c) an application level message 'Get Femto Statistics' to request that usage information about the operation of the femto is sent to the user terminal 48. This 'Get Femto Statistics' message includes an identifier of the user terminal 48 and an indication that the owner wishes usage information to be sent every ten seconds. Upon receiving this message, the user terminal identity checker 44 of the femto 30 compares the received identifier to that expected in order to check (step d) whether the identified user terminal is that of the owner. This is to prevent unauthorised users retrieving usage information. This expected identifier is that provided to the femto when the femto is first configured.

In this example, the user terminal is accepted to be that of the femto owner. In consequence, the femto then starts to track (step e) the relevant information. Specifically, information is recorded about each user terminal that is already attached to the femto and about all other user terminals that subsequently attach to and so use the femto. The information includes the identifier of the user terminal, the time of attachment, the length of time that the user is attached to the femto, the amount of data that the user has downloaded or upload to/from the network or between users attached to the femto.

Periodically (every 10 seconds in this example), the femto sends (step f) a data message including the information that the femto has gathered to the user terminal of the femto owner.

Upon receipt of the information, the femto owner's user terminal displays (step g) that information. An example of the information display 60 is shown in Figure 5. The information includes for each user terminal the time of last attachment to the femto, the overall duration for which the user terminal was attached, the amount of data downloaded to that user terminal and the amount of data uploaded from that user terminal.

In an alternative example, the displayed user terminal identifiers are the phone numbers associated with each user terminal. Although unique for each user terminal they are often relatively meaningless to the femto owner.

Accordingly, in this example the femto owner tags each user with a user-friendly identifier, for example the user's first name. In this example which is a closed access (in other words, private access) femto, tagging is performed as part of the access control procedure whereby users are registered with the femto as being authorised to use that femto. In this access control procedure, the femto owner uses a webpage to give permission for certain users to attach to and use the femto. In this example, this involves entering the phone number of each user terminal, which is then converted into a unique identifier, namely the International Mobile Subscriber Identity (IMSI) of the respective user terminal. As part of this procedure the femto owner provides the user-friendly tags, and associates a picture with each user tag.

As shown in Figure 5, in this example the user-friendly tags are Joe, Jill and Fred each having an associated picture related to that person.

Steps e, f, and g are repeated periodically so as to provide refreshed displayed information at the user terminal of the femto owner.

### Real time information on request of femtocell base station usage

In an alternative to the above approach, the use tracker 46 of the femto 30 acts autonomously to track usage information about each user terminal that attaches to and uses the femto. Then at some point, the femto owner triggers and requests to the femto to obtain and send this information. Once the request is authenticated as being from the femto owner the information recorded is sent in a single message as opposed to being sent periodically (or when a specific event occurs).

In this example, the femto owner wishes to obtain a single set of usasge information from his/her femto.

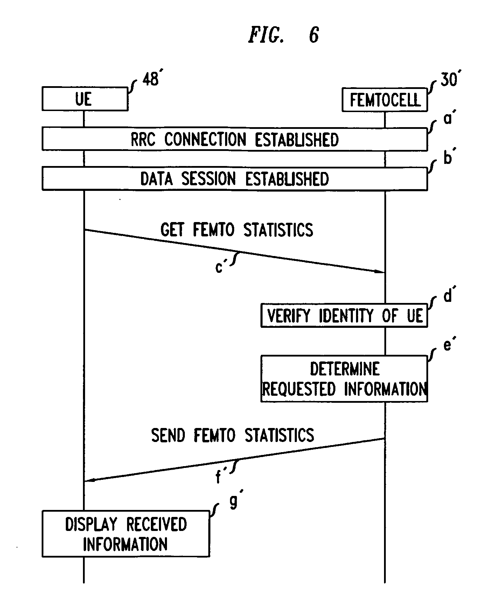

This approach is shown in more detail in Figure 6.

As shown in Figure 6, the following steps occur:
The femto owner wishes to obtain usage information from his/her femto so indicates that via a user interface of his/her user terminal which causes a Radio Resource Control (RRC) connection to be set up (step a') between the user terminal 48' and the femto 30'.
The user terminal 48' then triggers the establishment (step b) of a data session between the femto 30' and the femto owner's user terminal 48'. The user terminal 48' then sends (step c') an application level message `Femto Statistics' to the femto to request usage information from the last three days. The message includes an identifier of the user (the IMSI in this example).
Upon receiving this message, the user terminal identity checker (not shown) of the femto 30' compares the received identifier to that expected in order to check (step d') whether the identified user terminal is that of the owner. This is to prevent unauthorised users retrieving usage information. This expected identifier is that provided to the femto when the femto is first configured.
In this example, the user terminal is accepted to be that of the femto owner.
The request included an indication that the femto owner desire to see usage information from the last three days.
The femto obtains (step e') the requested information and sends (step f') a application level reply message 'Femto Statistics to the user terminal of the femto owner that includes the requested information. This response is an RRC Direct Transfer (Management information) response.
Upon receipt of the information, the femto owner's user terminal displays (step g') that information.
An example of the information displayed is shown in Table 1. The information includes for each call or data session: the user terminal, the status whether currently attached (e.g. call in progress) or time of last attachment to the user terminal, the duration of the attachment, and the amount of data downloaded to that user terminal and the amount of data uploaded from that user terminal during that attachment.

**Table 1**

| User | Time of last attachment | Duration of attachment | Downlink usage | Uplink Usage |
|---|---|---|---|---|
| Jack | Sept 12-13.15 | 20 minutes | 534 Mb | 30 Mb |
| Steve | Currently attached | 10 minutes | 200 Mb | 10 Mb |
| Chloe | Sept 13 -22.55 | 120 minutes | 1.43 Gb | 500 Mb |
| Jack | Sept 14 -09.05 | 10 minutes | 520 Mb | 600 Mb |

In this example the femto owner had previously used a webpage to give permissions to certain users to access the femtocell, and provides user-friendly tags to identify each permitted user. Accordingly, the information is displayed, as shown in Table 5, including the user-friendly tags, Jack, Steve, Chloe in this example.

It will be understood that this approach allows the femto owner to easily obtain and display information that he/she can use to manage his/her femtocell in real time.

The femto owner requests and receives the information to assist him or her in real-time management of the femto. For example, if one of the authorised users is using the femto when they should not be, for example a child who should have gone to bed so should not be using their user terminal, the femto owner, who may be a parent, is notified and so can take remedial action.

For example, many femtos are connected to a core network via a broadband internet backhaul link, so if the owner has a broadband internet rental "package" with a limited monthly bandwidth usage, it is useful for the femto owner to know how much of that bandwidth has been used by those accessing the femtocell, and who out of the users is consuming the most bandwidth.

For example, the femto owner can see whether an unauthorised user terminal has accessed or attempted to access the femto. In this example, the femto records information on any user terminal that attempted to attach to the femto but was denied access, for example because they were not permitted users authorised by the femto owner. This information is particularly useful where due to the position of the femto within the femto owner's premises, the femto has a radio coverage area extending significantly into a busy street so that unauthorised user terminals attempt to attach to the femto when they pass by. This information may cause the femto owner to take remedial action of moving the femto to another place within the building so the number of attachment attempts (per given period) from unauthorised user terminals is reduced.

In an otherwise similar alternative, the user terminal of the femto owner is used to select pictures to be displayed together with the user-friendly tags, in the information display.

### Use in a shop or store

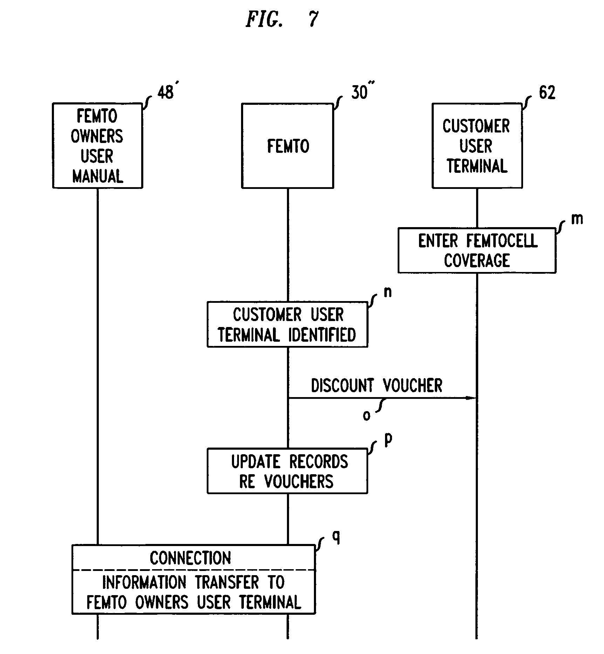

As shown in Figure 7, in another example, instead of being closed access so having a small set of users authorised by the femto owner, for example family members, the femto 30" is open access so other user terminals may attach. The open-access femto 30"has no or few access restrictions and is deployed in a shop or other commercial environment.

Upon a potential customer carrying a user terminal 62 entering (step m) the shop so coming into the radio coverage area of the femto 30", the customer's user terminal 62 is identified (step n) and a voucher is automatically sent (step o) to the customer's user terminal 62 offering them say a 10% discount on every purchase (the potential customer had previously agreed to receive such vouchers). The femto 30" updates (step p) its internal record (not shown) as to the vouchers which have been sent. The femto owner then uses his/her user terminal 48' to set up a connection with the femto 30" whereby information regarding the vouchers is requested and transferred (step q).

Specifically, in this example the femto owner obtains information on the number of customer user terminals that attached to the femto in the last two hours and how many of these were provided with the discount voucher.

The femto owner then correlates the number of user terminals that were provided with the discount voucher with the number of voucher that were subsequently used. Based on the correlation, the owner can determine, for example, whether the voucher discount needs to be altered or even whether it is better to not send further vouchers.

An example of the information displayed at the femto owner's user terminal is shown in Table 2 below, in which the information of more than four mobiles is presented.

The femto owner may make other useful inferences and conclusions from the information, for example how long on average a customer stayed in the shop.

It will be seen that a shop owner who owns the femto is able to correlate the number of users who are provided with, and use, the supplied voucher with the number of users who actually received the voucher when their user terminals attached to the shop's femtocell. The owner may obtain usage information from the femtocell for example as to the number of vouchers supplied, to determine how successful the voucher campaign is, allowing them to modify, or indeed stop, the campaign in real-time.

**Table 2**

| User | Time of Last attachment | Duration of attachment | Voucher downloaded? Y=yes/N=No) |
|---|---|---|---|
| Mobile 1 | Today -10.12 | 20 mins | Y |
| Mobile 2 | Today -10.34 | 5 mins | N |
| Mobile 3 | Today -10.55 | 10 mins | Y |
| Mobile 4 | Today -11.01 | 6 mins | Y |
| ··· | ··· | ··· | ··· |

### Some alternative Examples

In an otherwise similar example to that described above with reference to Figures 4 to 6, rather than the femto sending the information periodically to the user terminal of the femto owner, the information is instead sent when triggered by a specific type of event, for example when a new user terminal attaches to the femto. The information is provided to the user terminal of the femto owner in practically real time.

In an otherwise similar example to that described above with reference to Figure 7, the shop owner who owns the femto customises his/her request for usage information regarding which information elements are required and how often (in other words with what frequency) the information should be sent to the femto owner's user terminal.

### General

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of obtaining information stored in a small cell base station for wireless telecommunications of use of the small cell base station, in which
a user terminal in the coverage area of the small cell base station transmits over air to the small cell base station a request for the information and the identifier of the user terminal,
the small cell base station determines that the identifier is valid for the user terminal to be permitted to be sent the information,
the small cell base station transmits the information over air, and
the user terminal receives and displays the information.

2. A method according to claim 1, in which the identifier is the identifier of the user terminal of the person owning or responsible for the small cell base station.

3. A method according to any preceding claim in which the information comprises information of use of the small cell base station by specific user terminals.

4. A method according to any of claims 1 to 3, in which the small cell base station is available for use only to user terminals registered beforehand with the small cell base station as permitted users, and the information displayed is for each of the user terminals that have used the small cell base station.

5. A method according to any of claims 1 to 3, in which the small cell base station is available for use by further user terminals not registered beforehand with the small cell user terminal as permitted users, and upon entry into the coverage area of the small cell base station, the further user terminal is sent a message for display.

6. A method according to any preceding claim, in which the information comprises for a user terminal: an indicator of the user of the user terminal and at least one of time of last call session/data session, duration of that session, amount of data downloaded to the user terminal in that session, and amount of data uploaded from the user terminal in that session.

7. A method according to any preceding claim, in which the information comprises for each call/data session: an indicator of the user of the user terminal and at least one of time of last call session/data session, duration of that session, amount of data downloaded to the user terminal in that session, and amount of data uploaded from the user terminal in that session.

8. A method according to any preceding claim, in which the request for the information is an application level message.

9. A method according to any preceding claim, in which the request for information includes an indication whether usage information is to be sent once or periodically.

10. A method according to any preceding claim, in which the request for information and the identifier of the user terminal are transmitted together.

11. A method according to any of claims 1 to 9, in which the identifier is sent by the user terminal on request by the small cell base station as part of a Radio Resource Connection establishment procedure.

12. A small cell base station for wireless telecommunications comprising
means to store information of use of the small cell base station,
means to receive over air a request for the information from a user terminal in the coverage area of the small cell base station,
means to receive over air an identifier of the user terminal,
means to determine that the identifier is valid for the user terminal to be permitted to be transmitted the information,
means to transmit the information over air dependent upon the identifier being determined as valid.

13. A wireless telecommunications system comprising a small cell base station and a user terminal, in which
the user terminal in the coverage area of the small cell base station being configured to transmit over air to the small cell base station a request for information of use of the small cell base station and an identifier of the user terminal,
the small cell base station being configured to determine that the identifier is valid for the user terminal to be permitted to be transmitted the information,
the small cell base station being configured to transmit the information over air dependent upon the identifier being determined as valid,
the user terminal being configured to receive and display the information.

14. A wireless telecommunications system according to claim 12, in which the user terminal belongs to the owner of, or person responsible for, the small cell base station.
